(19)

Europäisches
Patentamt
European
Patent Office
Office européen
des brevets

(11) **EP 1 978 666 B1**

(12) **EUROPEAN PATENT SPECIFICATION**

(45) Date of publication and mention
of the grant of the patent:
**22.01.2014 Bulletin 2014/04**

(51) Int Cl.:
***H04L 1/06*** (2006.01)

(21) Application number: **07290394.1**

(22) Date of filing: **02.04.2007**

(54) **Method for transmitting and estimating symbols coded with coding matrix, as well as corresponding receiver and transmitter**

Verfahren zur Übertragung und Schätzung von mit einer Kodierungsmatrix kodierten Symbolen sowie entsprechender Empfänger und Sender

Procédé pour la transmission et l'estimation de symboles codés à l'aide d'une matrice de codage et récepteur et émetteur correspondants

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**08.10.2008 Bulletin 2008/41**

(73) Proprietor: **Sequans Communications**
**92073 Paris La Défense Cedex (FR)**

(72) Inventors:
• **Sari, Hikmet**
**94220 Charenton (FR)**

• **Sezginer, Serdar**
**1 rue Joliot-Curie**
**91192 Gif-sur-Yvette (FR)**

(74) Representative: **Gendron, Vincent Christian et al**
**Novagraaf Technologies**
**122, rue Edouard Vaillant**
**92593 Levallois-Perret Cedex (FR)**

(56) References cited:
**EP-A- 1 195 937**       **EP-A- 1 376 921**
**WO-A-01/63826**        **WO-A-02/098051**
**US-A1- 2005 105 629**

**Description**

The present invention pertains to wireless communication using multi-antennas techniques commonly referred to as Multi-Input Multi-Output techniques and using reception diversity technique.

The invention is particularly adapted to a space-time coding described by a two by two coding matrix transmitting four symbols using two transmit antennas and two consecutive symbol intervals.

The invention relates notably to a method for transmitting a sequence of symbols through at least a channel in a wireless communication system, the sequence of symbols comprising at least a first, a second, a third and a fourth symbols, the value of each symbol belonging to at least a signal constellation, the method comprising at least the steps of:

-   forming a coding matrix with said sequence of symbols, each component of the coding matrix being a linear combination of two symbols among the first, the second, the third and the fourth symbols,
-   transmitting a first and a second components of a first column of the coding matrix through respectively a first and a second transmit antennas at a first time slot,
-   transmitting a first and a second components of a second column of the coding matrix through respectively the first and the second transmit antennas at a second time slot.

Multiple antenna techniques commonly known as MIMO (Multi-Input Multi-Output) have become very popular for wireless applications. Such techniques have been included for example in the technical specifications recently developed for wireless local area networks and metropolitan area networks. MIMO techniques can be used to provide spatial diversity and enhance robustness to signal fading, or to provide spatial multiplexing and increase throughput on the wireless channel, or to provide both.

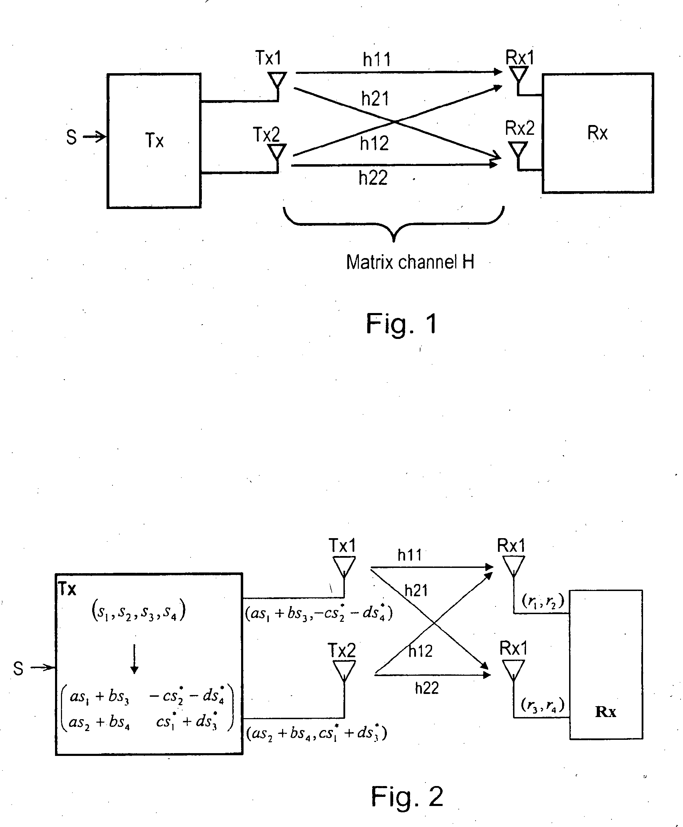

In MIMO systems, transmitter Tx, as well as receiver Rx are equipped with multiple antennas. In the MIMO system illustrated in figure 1, the transmitter Tx and the receiver Rx are both equipped, for example, with respectively a first and a second transmit antennas, Tx1 and Tx2, and a first and a second receive antennas, Rx1 and Rx2.

Among the numerous solution proposed in the literature for MIMO profiles for the downlink channel (from a base station to mobile users), the IEEE 802.16-2005 specifications (IEEE being the acronym for Institute of Electrical and Electronics Engineer) proposes a full-rate and full-diversity space-time code (STC) of dimension 2x2 described by a matrix C defined as:

$$C = \frac{1}{\sqrt{1+r^2}} \begin{bmatrix} s_1 + jrs_4 & rs_2 + s_3 \\ s_2 - rs_3 & jrs_1 + s_4 \end{bmatrix},$$

where

$$r = \frac{-1+\sqrt{5}}{2},$$

$s_1$, $s_2$, $s_3$, $s_4$ are respectively a first, a second, a third and a fourth symbols.

At the transmitter side, using the space-time code described by the matrix C in the MIMO system for transmitting an input signal S formed with a plurality of symbols mapped in at least a signal constellation (for example 16-QAM signal constellation or 64-QAM signal constellation, QAM being the acronym for Quadrature Amplitude Modulation), consists in :

-   grouping the symbols four by four to form quadruplets of symbols to be transmitted,
-   selecting a quadruplet of symbol $(s_1,s_2,s_3,s_4)$ to be transmitted, and forming the matrix C with this quadruplet of symbols, and
-   transmitting the first and the second column of said matrix C respectively at a first and a second time slots (corresponding to a given symbol period) through the first and the second transmit antennas Txl, Tx2.

At the receiver side, to estimate the incoming signal, the receiver evaluates the maximum likelihood function for all quadruplets of symbols $(s_1,s_2,s_3,s_4)$ of the signal constellation and selects the one which minimizes this function. The maximum likelihood function used to evaluate the quadruplets of symbols is actually the squared Euclidean distance between the received noisy signal and the noiseless signal corresponding to that quadruplet.

Even if the matrix C is a space-time code which leads to a spatial diversity of order four, the problem of this space-time code is its inherent complexity. Indeed, for a signal constellation with M points, M being a positive integer, the optimum receiver hence involves the computation of $M^4$ Euclidean distances and selects the quadruplet of symbols minimizing this distance. The receiver complexity is therefore proportional to $16^4 = 65536$ for a 16-QAM signal constellation, and to $64^4 = 16777216$ for a 64-QAM signal constellation. This is prohibitive in practical applications, and therefore one has to resort to suboptimum receivers which degrade performance.

One aim of the invention is to propose a method for estimating an incoming signal exempt from at least one of the drawbacks previously mentioned.

EP -A- 1 195 937 discloses a space-time coding with orthogonal transformations in which data streams are subject to orthogonal transformation before coding and in which the coding matrix is defined as

$$\begin{pmatrix} s_1 + s_3 & -(s_2 + s_4)^* \\ s_2 - s_4 & (s_1 - s_3)^* \end{pmatrix}$$

The invention allows notably the use of a space-time code which does not involve the computation of $M^4$ Euclidean distances in an optimum receiver, and in which the complexity is reduced, for example, to the square of the size of signal constellation.

For this purpose, an object of the invention is to provide a method for transmitting a sequence of symbols through at least a channel in a wireless communication system, the sequence of symbols comprising at least a first, a second, a third and a fourth symbols, the value of each symbol belonging to at least a signal constellation, the method comprising at least the steps of:

- coding by forming a coding matrix with said sequence of symbols, each component of the coding matrix being a linear combination of two symbols among the first, the second, the third and the fourth symbols,
- transmitting a first and a second components of a first column of the coding matrix through respectively a first and a second transmit antennas, at a first time slot,
- transmitting a first and a second components of a second column of the coding matrix through respectively the first and the second transmit antennas, at a second time slot,

characterized in that the coding matrix is defined as:

$$\begin{pmatrix} as_1 + bs_3 & -cs_2^* - ds_4^* \\ as_2 + bs_4 & cs_1^* + ds_3^* \end{pmatrix},$$

$s_1, s_2, s_3, s_4$ being respectively the first, the second, the third and the fourth symbols, the star designating the complex conjugate, and a, b, c, d being complex numbers of modulus 1.

Another object of the invention is to provide a device for transmitting an input signal through at least a propagation channel in a wireless, implementing at least the transmission method described above.

Another object of the invention is to provide a method for estimating an incoming signal corresponding to a sequence of symbols coded with a coding matrix and transmitted through a propagation channel in accordance with independent claim 3.

Therefore, the methods according to the invention, allows the implementation of a full-rate and full-diversity 2x2 space-time code whose optimum receiver has a complexity that is only proportional to the square of the signal constellation used. Thus, the number of Euclidean distance computations in the optimum detector is reduced to $16^2 = 256$ for a 16-QAM signal constellation and to $64^2 = 4096$ for a 64-QAM signal constellation.

Of course, the method can be used with different signal constellations and with an arbitrary number of receive antennas.

The coding matrix is defined as:

$$\begin{pmatrix} as_1 + bs_3 & -cs_2^* - ds_4^* \\ as_2 + bs_4 & cs_1^* + ds_3^* \end{pmatrix},$$

s1, s2, s3, s4 being respectively the first, the second, the third and the fourth symbols, the star designating  the complex conjugate, and a, b, c, d being complex numbers of modulus 1.

The incoming signal may comprise components representing signals received at least by the first and the second receive antennas at the first and the second time slots.

The first and the second intermediate signals may be computed by performing at least:

- step A : for each component of the incoming signal, removing terms depending of the third and the fourth symbols which are present in said component of the incoming signal,
- step B1 : for each result of step A, multiplying said result by one of the components of the channel matrix or by the complex conjugate of one of the components of the channel matrix, so that the coefficient of the first symbol contains a square modulus term,
- step B2 : for each result of step A, multiplying said result by one of the components of the channel matrix or by the complex conjugate of one of the components of the channel matrix, so that the coefficient of the second symbol contains a square modulus term,
- step C1 : computing the first intermediate signal by using all the results of step B1,
- step C2 : computing the second intermediate signal by using all the results of step B2.

The slope of the affine functions of the first intermediate signal may be the sum of all the square modulus of the components of the channel matrix.

The slope of the affine functions of the second intermediate signal may be the sum of all the square modulus of the components of the channel matrix.

For example, the set of couples of values includes all the couple of values belonging to the signal constellation.

The third symbol may be identical to the fourth symbol.

The method may further use the first, the second, a third and a fourth receive antennas.

Another object of the invention is to provide a device for estimating an incoming signal, implementing at least the estimation method described above.

Thus, the invention allows notably the implementation of full-rate and full-diversity $2 \times 2$ space-time code with optimum receiver.

Other features and advantages of the invention will appear more clearly from the description of preferred embodiments of the invention made hereinafter, given by way of example only, with reference to the accompanying drawings, wherein:

- Figure 1 shows a general block diagram of a MIMO system with two transmit antennas and two receive antennas;
- Figure 2 shows a general block diagram of a $2 \times 2$ MIMO system incorporating the space time code according to the invention;
- Figure 3 shows one stage of receiver processing the incoming signal to determine the maximum-likelihood estimate of first and second symbols;
- Figure 4 illustrates another stage of the receiver processing the incoming signal to determine the maximum-likelihood estimate of third and fourth symbols;

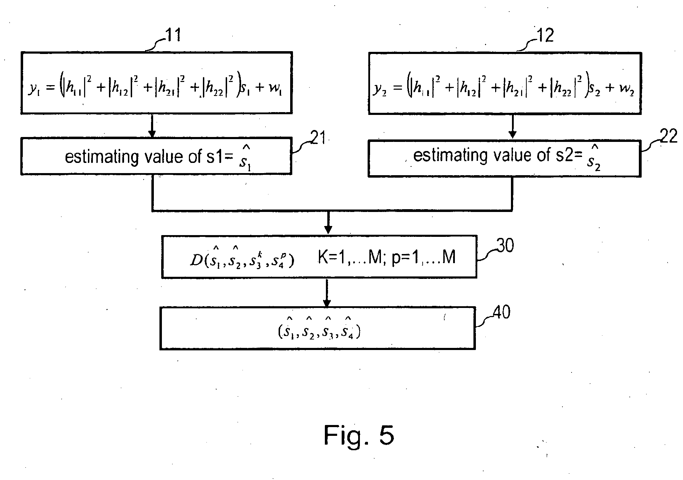

- Figure 5 is a flow chart showing the general steps of the estimation method to be performed in MIMO system with two receive antennas.

According to one embodiment of the invention, and referring to figure 2, a receiver Rx and a transmitter Tx are equipped, for example, with respectively two receive antennas Rx1, Rx2 and two transmit antennas Tx1, Tx2.

At the transmitter Tx side, an input signal S is fed into the transmitter Tx, which performs, for example coding and modulation to provide, from the input signal, a sequence of symbols. The value of each symbol belongs to a signal constellation. This sequence of symbols are grouped four by four to form a sequence of symbol quadruplets ($s_1,s_2,s_3, s_4$), $s_1$, $s_2$, $s_3$, $s_4$ designating respectively a first, a second, a third and a fourth symbols.

For each quadruplet of symbols ($s_1,s_2,s_3,s_4$), a coding matrix is formed as follow:

$$\text{CM} = \begin{pmatrix} as_1 + bs_3 & -cs_2^* - ds_4^* \\ as_2 + bs_4 & cs_1^* + ds_3^* \end{pmatrix}, \qquad (1a)$$

a, b, c, d being complex numbers of modulus 1 and the star designating complex conjugate. Each component of the coding matrix CM being a linear combination of two symbols among the first, the second, the third and the fourth symbols $s_1$, $s_2$, $s_3$, $s_4$, the value of each symbol belonging at least to the signal constellation. The first column of the coding matrix represents the linear symbols combinations transmitted at a first time slot T1, and the second column of the coding matrix represents the linear symbols combinations transmitted at a second time slot T2. The first and the second time slots may be two consecutive symbol intervals. The first row of the coding matrix gives the linear symbol combinations transmitted through the first transmit antenna Tx1, and the second row of the coding matrix gives the linear symbol combinations transmitted through the second transmit antenna Tx2. In other words, $as_1 + bs_3$ is transmitted through the first transmit antenna Tx1 at the first time slot T1 (or symbol interval), $as_2 + bs_4$ is transmitted through the second transmit antenna Tx2 at the first time slot T1, $-cs_2^* - ds_4^*$ is transmitted through the first transmit antenna Tx1 at the second time slot T2, and $cs_1^* + ds_3^*$ is transmitted through the second transmit antenna Tx2 at the second time slot T2.

At the receiver side, the linear symbols combinations are captured by the two receive antennas, Rx1 and Rx2. The received signal R, or incoming signal, received during the first and the second time slot, can be theoretically expressed in matrix form as:

$$R = \begin{bmatrix} r_1 & r_2 \\ r_3 & r_4 \end{bmatrix} = \begin{bmatrix} h_{11} & h_{12} \\ h_{21} & h_{22} \end{bmatrix} \begin{bmatrix} as_1 + bs_3 & -cs_2^* - ds_4^* \\ as_2 + bs_4 & cs_1^* + ds_3^* \end{bmatrix} + \begin{bmatrix} n_1 & n_2 \\ n_3 & n_4 \end{bmatrix} = H.MC + N \qquad (1b)$$

where :

- $r_1$ and $r_2$ represent the signals received on the first receive antenna Rx1 at respectively the first and the second time slots;
- $r_3$ and $r_4$ represent the signals received on the second receive antenna Rx2 at respectively the first and the second time slots;
- H is a channel matrix, in which $h_{ji}$ represents the propagation channel response between the ith transmit antenna and the jth receive antenna, j and i being integers,
- N is a noise term matrix, in which $n_j$ represents the additive noise term affecting the signals on the first and the second receive antenna at the first and the second time slots.

Thus, on the first receive antenna Rx1, the two signals received at the first and second time slots are:

$$r_1 = h_{11}(as_1 + bs_3) + h_{12}(as_2 + bs_4) + n_1 \qquad (2.a)$$

$$r_2 = h_{11}(-cs_2^* - ds_4^*) + h_{12}(cs_1^* + ds_3^*) + n_2 \qquad (2.b)$$

Similarly, on the second receive antenna Rx2, the two signals received at the first and second time slots are:

$$r_3 = h_{21}(as_1 + bs_3) + h_{22}(as_2 + bs_4) + n_3 \qquad (3.a)$$

$$r_4 = h_{21}(-cs_2^* - ds_4^*) + h_{22}(cs_1^* + ds_3^*) + n_4 \qquad (3.b)$$

To recover the quadruplet of symbols $(s_1, s_2, s_3, s_4)$ transmitted from the received signal R, the receiver Rx has to seek the most probable transmitted quadruplet of symbols. For this purpose, an optimum detector of the receiver makes an exhaustive search over all possible values of the transmitted symbols and decides in favor of a quadruplet of symbols which minimizes the Euclidean distance:

$$D(s_1, s_2, s_3, s_4) =$$

$$\left\{\left|r_1 - h_{11}(as_1 + bs_3) - h_{12}(as_2 + bs_4)\right|^2 + \left|r_2 - h_{11}(-cs_2^* - ds_4^*) - h_{12}(cs_1^* + ds_3^*)\right|^2\right.$$

$$\left. + \left|r_3 - h_{21}(as_1 + bs_3) - h_{22}(as_2 + bs_4)\right|^2 + \left|r_4 - h_{21}(-cs_2^* - ds_4^*) - h_{22}(cs_1^* + ds_3^*)\right|^2\right\} \quad (4)$$

If M designates the size of the signal constellation, an exhaustive search involves the computation of $M^4$ metrics and $M^4$-1 comparisons, which is excessive for the 16-QAM and 64-QAM signal constellations.

To reduce the complexity, the receiver performs the following method:

- computing 11 a first intermediate signal $y_1$ from the received signal, the first intermediate signal $y_1$ being a first affine function in which the variable is for example the first symbol $s_1$,
- computing 12 a second intermediate signal $y_2$ from the received signal, the second intermediate signal $y_2$ being a second affine function in which the variable is the second symbol $s_2$,
- estimating 21 the value of the first symbol $s_1$ from the first intermediate signal $y_1$,
- estimating 22 the value of the second symbol $s_2$ from the second intermediate signal $y_2$,
- selecting a set of couples of values, each couple of values consisting in the values of two symbols belonging to the signal constellation,
- for each couple of values selected, calculating 30 a Euclidean distance between the incoming signal and a noiseless signal, the noiseless signal being defined as the product of the channel matrix H and the coding matrix *CM* corresponding to the selected couple of values and the estimated values of the first and the second symbols $s_1$, $s_2$,
- selecting the minimal Euclidean distance among the Euclidean distances respectively calculated for the different selected couples of values, and
- selecting 40 the values of the first, second, third and fourth symbols $s_1$, $s_2$, $s_3$, $s_4$ corresponding to the selected minimum Euclidean distance.

To compute the first and the second intermediate signal, a processor PROC of the receiver Rx can perform the following operations:

- step A : for each component of the incoming signal, removing terms depending of the third and the fourth symbols $(s_3, s_4)$ which are present in said component of the received signal: for instance, from the received signal samples $(r_1, r_2, r_3, r_4)$, the following signals may be computed:

$$x_1 = r_1 - b(h_{11}s_3 + h_{12}s_4) = a(h_{11}s_1 + h_{12}s_2) + n_1 \qquad (5.a)$$

$$x_2 = r_2 - d(h_{12}s_3^* - h_{11}s_4^*) = c(h_{12}s_1^* - h_{11}s_2^*) + n_2 \qquad (5.b)$$

$$x_3 = r_3 - b(h_{21}s_3 + h_{22}s_4) = a(h_{21}s_1 + h_{22}s_2) + n_3 \qquad (5.c)$$

$$x_4 = r_4 - d(h_{22}s_3^* - h_{21}s_4^*) = c(h_{22}s_1^* - h_{21}s_2^*) + n_4 \qquad (5.d)$$

- step B1 : for each result of step A, multiplying said result by one of the components of the channel matrix or by the complex conjugate of one of the components of the channel matrix, so that the coefficient of the first symbol contains a square modulus term: for instance, from $(x_1, x_2, x_3, x_4)$, following signals may be computed:

$$h_{11}^* x_1 = a\left(|h_{11}|^2 s_1 + h_{11}^* h_{12} s_2\right) + h_{11}^* n_1 \qquad (6.a)$$

$$h_{12} x_2^* = c^* \left( |h_{12}|^2 s_1 - h_{11}^* h_{12} s_2 \right) + h_{12} n_2^*$$ (6.b)

$$h_{21}^* x_3 = a \left( |h_{21}|^2 s_1 + h_{21}^* h_{22} s_2 \right) + h_{21}^* n_3$$ (6.c)

$$h_{22} x_4^* = c^* \left( |h_{22}|^2 s_1 - h_{21}^* h_{22} s_2 \right) + h_{22} n_4^*$$ (6.d)

- step B2 : for each result of step A, multiplying said result by one of the components of the channel matrix or by the complex conjugate of one of the components of the channel matrix, so that the coefficient of the second symbol contains a square modulus term: for instance, from $(x_1, x_2, x_3, x_4)$, the following signals may be computed:

$$h_{12}^* x_1 = a \left( h_{11} h_{12}^* s_1 + |h_{12}|^2 s_2 \right) + h_{12}^* n_1$$ (8.A)

$$h_{11} x_2^* = c^* \left( h_{11} h_{12}^* s_1 - |h_{11}|^2 s_2 \right) + h_{11} n_2^*$$ (8.B)

$$h_{22}^* x_3 = a \left( h_{21} h_{22}^* s_1 + |h_{22}|^2 s_2 \right) + h_{22}^* n_3$$ (8.C)

$$h_{21} x_4^* = c^* \left( h_{21} h_{22}^* s_1 - |h_{21}|^2 s_2 \right) + h_{21} n_4^*$$ (8.D)

- step C1 : computing the first intermediate signal $y_1$ by using all the results of step B1: for instance, the first intermediate signal may be given by:

$$
\begin{aligned}
y_1 &= \left( h_{11}^* x_1 + h_{21}^* x_3 \right) / a + \left( h_{12} x_2^* + h_{22} x_4^* \right) / c^* \\
&= \left( |h_{11}|^2 + |h_{12}|^2 + |h_{21}|^2 + |h_{22}|^2 \right) s_1 + w_1
\end{aligned}
$$ (7)

with $w_1 = \left( h_{11}^* n_1 + h_{21}^* n_3 \right) / a + \left( h_{12} n_2^* + h_{22} n_4^* \right) / c^*$ .

The first intermediate signal $y_1$ has no terms involving the second symbol $s_2$, and the coefficient of the term in the first symbol $s_1$ clearly indicates that estimation of the first symbol $s_1$ benefits from full fourth-order spatial diversity.

- step C2 : computing the second intermediate signal $y_2$ by using all the results of step B2: for instance, the second intermediate signal may be given by:

$$
\begin{aligned}
y_2 &= \left( h_{12}^* x_1 + h_{22}^* x_3 \right) / a - \left( h_{11} x_2^* + h_{21} x_4^* \right) / c^* \\
&= \left( |h_{11}|^2 + |h_{12}|^2 + |h_{21}|^2 + |h_{22}|^2 \right) s_2 + w_2
\end{aligned}
$$ (9)

with $w_2 = \left( h_{12}^* n_1 + h_{22}^* n_3 \right) / a - \left( h_{11} n_2^* + h_{21} n_4^* \right) / c^*$ .

The second intermediate signal $y_2$ has no terms involving the first symbol $s_1$, and the coefficient of the term in the

second symbol $s_2$ shows that estimation of the second symbol $s_2$ benefits from full fourth-order spatial diversity.

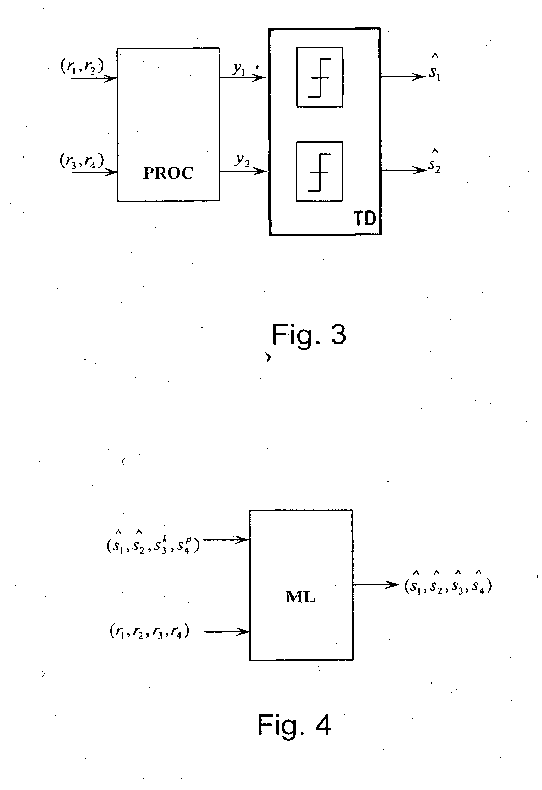

Therefore, as illustrated in figure 3, the first intermediate signal $y_1$ is sent to a threshold detector TD of the receiver Rx, which generate the maximum likelihood estimate of the value of the first symbol and denoted $\hat{s}_1$. By sending the second intermediate signal $y_2$ to the threshold detector TD, we get the maximum likelihood estimate of the second symbol and denoted $\hat{s}_2$.

Now, as shown in figure 4, instead of computing the Euclidean distances $D(s_1,s_2,s_3,s_4)$ for all possible values of the first, the second, the third and the fourth symbols, a maximum likelihood estimator (ML) of the receiver may only compute the Euclidean distances $D(\hat{s}_1,\hat{s}_2,s_3,s_4)$ for the quadruplets of symbols formed with the estimated value of the first symbol, the estimated value of the second symbol, and the values of the third and the fourth symbols spanning the signal constellation. Specifically, let ($s_3^k$ , $s_4^p$) indicate that the third symbol $s_3$ takes the $k^{th}$ point of the signal constellation and the fourth symbol $s_4$ takes the $p^{th}$ point of the signal constellation. The receiver computes the Euclidean distance $D(s_1,s_2,s_3,s_4)$ for each quadruplet of symbols ($\hat{s}_1,\hat{s}_2, s_3^k$ , $s_4^p$), where k=1,2,...M, and p=1,2,...,M, M being the size of the signal constellation. Then, the receiver selects the minimal Euclidean distance among the Euclidean distances respectively calculated for the different selected quadruplet, and selects the values of the first, second, third and fourth symbols corresponding to the selected minimum Euclidean distance.

The a, b, c, d parameters in the code matrix CM are design parameters which can be optimized to maximize the coding gain.

According to another example, instead of estimating the values of the first and the second symbols and then computing the Euclidean distances $D(s_1,s_2,s_3,s_4)$ for all the quadruplets ($\hat{s}_1,\hat{s}_2, s_3^k$ , $s_4^p$), the receiver can first estimate the values of the third and the fourth symbols and then compute the Euclidean distances $D(s_1,s_2,s_3,s_4)$ for all the quadruplets ($s_1^k$ , $s_2^p$ , $\hat{s}_3$, $\hat{s}_4$), and select the quadruplet minimizing the Euclidean distance.

According to another example, the method previously described is applied to a MIMO system comprising two transmit antennas Tx1, Tx2 and more than two receive antennas, for example four receive antennas Rx1,Rx2,Rx3,Rx4.

In this case, on the first receive antenna Rx1, the two signals received at the first and second time slot are:

$$ r_1 = h_{11}\left(as_1 + bs_3\right) + h_{12}\left(as_2 + bs_4\right) + n_1 \qquad (10.a) $$

$$ r_2 = h_{11}\left(-cs_2^* - ds_4^*\right) + h_{12}\left(cs_1^* + ds_3^*\right) + n_2 \qquad (10.b) $$

On the second receive antenna Rx2, the two signals received at the first and second time slot are:

$$ r_3 = h_{21}\left(as_1 + bs_3\right) + h_{22}\left(as_2 + bs_4\right) + n_3 \qquad (11.a) $$

$$ r_4 = h_{21}\left(-cs_2^* - ds_4^*\right) + h_{22}\left(cs_1^* + ds_3^*\right) + n_4 \qquad (11.b) $$

Similarly, on the third receive antenna Rx3, the two signals received at the first and second time slot are:

$$ r_5 = h_{31}\left(as_1 + bs_3\right) + h_{32}\left(as_2 + bs_4\right) + n_5 \qquad (12.a) $$

$$ r_6 = h_{31}\left(-cs_2^* - ds_4^*\right) + h_{32}\left(cs_1^* + ds_3^*\right) + n_6 \qquad (12.b) $$

Finally, on the fourth receive antenna Rx4, the two signals received at the first and second time slot are:

$$r_7 = h_{41}(as_1 + bs_3) + h_{42}(as_2 + bs_4) + n_7 \qquad (13.a)$$

$$r_8 = h_{41}(-cs_2^* - ds_4^*) + h_{42}(cs_1^* + ds_3^*) + n_8 \qquad (13.b)$$

From the received signal samples $(r_1, r_2, r_3, r_4, r_5, r_6, r_7, r_8)$, the processor of the receiver may compute the following signals:

$$x_1 = r_1 - b(h_{11}s_3 + h_{12}s_4) = a(h_{11}s_1 + h_{12}s_2) + n_1 \qquad (14.a)$$

$$x_2 = r_2 - d(h_{12}s_3^* - h_{11}s_4^*) = c(h_{12}s_1^* - h_{11}s_2^*) + n_2 \qquad (14.b)$$

$$x_3 = r_3 - b(h_{21}s_3 + h_{22}s_4) = a(h_{21}s_1 + h_{22}s_2) + n_3 \qquad (14.c)$$

$$x_4 = r_4 - d(h_{22}s_3^* - h_{21}s_4^*) = c(h_{22}s_1^* - h_{21}s_2^*) + n_4 \qquad (14.d)$$

$$x_5 = r_5 - b(h_{31}s_3 + h_{32}s_4) = a(h_{31}s_1 + h_{32}s_2) + n_5 \qquad (14.e)$$

$$x_6 = r_6 - d(h_{32}s_3^* - h_{31}s_4^*) = c(h_{32}s_1^* - h_{31}s_2^*) + n_6 \qquad (14.f)$$

$$x_7 = r_7 - b(h_{41}s_3 + h_{42}s_4) = a(h_{41}s_1 + h_{42}s_2) + n_7 \qquad (14.g)$$

$$x_8 = r_8 - d(h_{42}s_3^* - h_{41}s_4^*) = c(h_{42}s_1^* - h_{41}s_2^*) + n_8 \qquad (14.h)$$

Next, from $(x_1, x_2, x_3, x_4, x_5, x_6, x_7, x_8)$, the following signals may be computed:

$$h_{11}^* x_1 = a(|h_{11}|^2 s_1 + h_{11}^* h_{12} s_2) + h_{11}^* n_1 \qquad (15.a)$$

$$h_{12} x_2^* = c^*(|h_{12}|^2 s_1 - h_{11}^* h_{12} s_2) + h_{12} n_2^* \qquad (15.b)$$

$$h_{21}^* x_3 = a(|h_{21}|^2 s_1 + h_{21}^* h_{22} s_2) + h_{21}^* n_3 \qquad (15.c)$$

$$h_{22}x_4^* = c^* \left( |h_{22}|^2 s_1 - h_{21}^* h_{22} s_2 \right) + h_{22}n_4^* \qquad (15.\text{d})$$

$$h_{31}^* x_5 = a \left( |h_{31}|^2 s_1 + h_{31}^* h_{32} s_2 \right) + h_{31}^* n_5 \qquad (15.\text{e})$$

$$h_{32}x_6^* = c^* \left( |h_{32}|^2 s_1 - h_{31}^* h_{32} s_2 \right) + h_{32}n_6^* \qquad (15.\text{f})$$

$$h_{41}^* x_7 = a \left( |h_{41}|^2 s_1 + h_{41}^* h_{42} s_2 \right) + h_{41}^* n_7 \qquad (15.\text{g})$$

$$h_{42}x_8^* = c^* \left( |h_{42}|^2 s_1 - h_{41}^* h_{42} s_2 \right) + h_{42}n_8^* \qquad (15.\text{h})$$

From those signals, the first intermediate signal may be given by:

$$y_1 = \left( h_{11}^* x_1 + h_{21}^* x_3 + h_{31}^* x_5 + h_{41}^* x_7 \right) / a + \left( h_{12}x_2^* + h_{22}x_4^* + h_{32}x_6^* + h_{42}x_8^* \right) / c^*$$

$$= \left( |h_{11}|^2 + |h_{12}|^2 + |h_{21}|^2 + |h_{22}|^2 + |h_{31}|^2 + |h_{32}|^2 + |h_{41}|^2 + |h_{42}|^2 \right) s_1 + w_1 \qquad (16)$$

With $w_1 = \left( h_{11}^* n_1 + h_{21}^* n_3 + h_{31}^* n_5 + h_{41}^* n_7 \right) / a + \left( h_{12}n_2^* + h_{22}n_4^* + h_{32}n_6^* + h_{42}n_8^* \right) / c^*$ .

The first intermediate signal $y_1$ has no terms involving the second symbol $s_2$ and the coefficient of the term in the first symbol $s_1$ clearly indicates that estimation of the first symbol $s_1$ benefits from full eight-order spatial diversity. The first intermediate signal $y_1$ is sent to the threshold detector TD of the receiver, which generates an estimation of the value of the first symbol, denoted $\hat{s}_1$.

Similarly, for the second intermediate signal $y_2$, the following signals may be computed:

$$h_{12}^* x_1 = a \left( h_{11}h_{12}^* s_1 + |h_{12}|^2 s_2 \right) + h_{12}^* n_1 \qquad (17.\text{a})$$

$$h_{11}x_2^* = c^* \left( h_{11}h_{12}^* s_1 - |h_{11}|^2 s_2 \right) + h_{11}n_2^* \qquad (17.\text{b})$$

$$h_{22}^* x_3 = a \left( h_{21}h_{22}^* s_1 + |h_{22}|^2 s_2 \right) + h_{22}^* n_3 \qquad (17.\text{c})$$

$$h_{21}x_4^* = c^* \left( h_{21}h_{22}^* s_1 - |h_{21}|^2 s_2 \right) + h_{21}n_4^* \qquad (17.\text{d})$$

$$h_{32}^* x_5 = a \left( h_{31}h_{32}^* s_1 + |h_{32}|^2 s_2 \right) + h_{32}^* n_5 \qquad (17.\text{a})$$

$$h_{31}x_6^* = c^* \left( h_{31}h_{32}^*s_1 - |h_{31}|^2 s_2 \right) + h_{31}n_6 \qquad\qquad (17.b)$$

$$h_{42}^*x_7 = a \left( h_{41}h_{42}^*s_1 + |h_{42}|^2 s_2 \right) + h_{42}^*n_7 \qquad , \qquad\qquad (17.c)$$

$$h_{41}x_8^* = c^* \left( h_{41}h_{42}^*s_1 - |h_{41}|^2 s_2 \right) + h_{41}n_8^* \qquad\qquad (17.d)$$

and then the second intermediate signal may be given by:

$$y_2 = \left( h_{12}^* x_1 + h_{22}^* x_3 + h_{32}^* x_5 + h_{42}^* x_7 \right)/a - \left( h_{11}x_2^* + h_{21}x_4^* + h_{31}x_6^* + h_{41}x_8^* \right)/c^*$$

$$= \left( |h_{11}|^2 + |h_{12}|^2 + |h_{21}|^2 + |h_{22}|^2 + |h_{31}|^2 + |h_{32}|^2 + |h_{41}|^2 + |h_{42}|^2 \right) s_2 + w_2 \qquad (18)$$

with $w_2 = \left( h_{12}^* n_1 + h_{22}^* n_3 + h_{32}^* n_7 + h_{42}^* n_8 \right)/a - \left( h_{11}n_2^* + h_{21}n_4^* + h_{31}n_6^* + h_{41}n_8^* \right)/c^*$ .

The second intermediate signal $y_2$ has no terms involving the first symbol $s_1$ and the coefficient of the term in the second symbol $s_2$ clearly indicates that estimation of the second symbol $s_2$ benefits from full eight-order spatial diversity. The second intermediate signal $y_2$ is sent to the threshold detector TD of the receiver, which generates an estimation of the value of the second symbol, denoted $\hat{s}_2$.

Finally, the estimated values $(\hat{s}_1,\hat{s}_2)$ are used to perform the maximum likelihood detection as described in two receive antennas case explained above.

The complexity of the receiver can be reduced to M when the number of symbols in the transmission matrix given in (1a) is reduced to three, for example, by setting $s_4=s_3$ and by applying the method described above in the case of two receive antennas. It can be seen that the first and the second intermediate signals have no terms involving respectively the second and the first symbols, and the estimations of the values of the first and the second symbols benefit from full fourth-order spatial diversity. By sending the first and the second intermediate signals to the threshold detector, we get the maximum likelihood estimate of the values of the first and the second symbols, denoted $(\hat{s}_1,\hat{s}_2)$. Now, instead of computing the Euclidean distance $D(s_1,s_2,s_3)$ for all $(s_1,s_2,s_3)$ values, we only need to compute it for $(\hat{s}_1,\hat{s}_2,s_3)$ values, with $s_3$ spanning the signal constellation. Specifically, let $s_3^k$ indicate that the third symbol takes the $k$th point of the signal constellation, where k=1,2,...,M. The receiver computes the Euclidean distance $D(s_1,s_2,s_3)$ for all $\left( \hat{s}_1,\hat{s}_2,s_3^k \right)$, with k=1,2,...,M. This procedure may reduce the receiver complexity from M3 to M.

According to another embodiment of the invention, the estimating method can be applied for symbols coded with a more general matrix which can be given by :

$$\begin{pmatrix} as_1 + bs_3 & -cs_2^* - ds_4^* \\ es_2 + fs_4 & gs_1^* + hs_3^* \end{pmatrix} \qquad\qquad (19)$$

where a, b, c, d, e, f, g, h are complex numbers of modulus 1.

For instance, by fixing a=e and c=g in the coding matrix given by expression 19, the estimation method according to the invention can be performed, in the case of a MIMO system having two receive antennas, by rewriting all the equations 2.a to 9, by obtaining the estimated values of the first and the second symbols, by computing the Euclidean distances $D(s_1,s_2,s_3,s_4)$ for all the quadruplet $(\hat{s}_1,\hat{s}_2, s_3^k, s_4^p)$ (k=1,2,...M, and p=1,2,...,M, M being the size of the signal constellation), and by selecting the quadruplets of symbols which minimize the Euclidean distance.

It is also possible to fix b=f and d=h in the coding matrix given by the expression 19. In this case, the values of the third and the fourth symbols can be estimated, and the Euclidean distances $D(s_1, s_2, s_3, s_4)$ for all the quadruplet ($s_1^k$, $s_2^p$, $\hat{s}_3$, $\hat{s}_4$), (k=1,2,...M, and p=1, 2, ..., M, M being the size of the signal constellation), and select the quadruplet of symbols which minimizing the Euclidean distance.

**Claims**

1. Method for transmitting a sequence of symbols through at least a channel in a wireless communication system, the sequence of symbols comprising at least a first, a second, a third and a fourth symbols $s_1$, $s_2$, $s_3$, $s_4$, the value of each symbol belonging to signal constellation,
   the method comprising at least the steps of:

   - coding by forming a coding matrix *MC* with said sequence of symbols, each component of the coding matrix *MC* being a linear combination of two symbols among the first, the second, the third and the fourth symbols $s_1$, $s_2$, $s_3$, $s_4$,
   - transmitting a first and a second components of a first column of the coding matrix through respectively a first and a second transmit antennas (Tx1, Tx2), at a first time slot (T1),
   - transmitting a first and a second components of a second column of the coding matrix through respectively the first and the second transmit antennas (Tx1, Tx2), at a second time slot (T2),

   **characterized in that** the coding matrix *MC* is defined as:

   $$\begin{pmatrix} as_1 + bs_3 & -cs_2^* - ds_4^* \\ as_2 + bs_4 & cs_1^* + ds_3^* \end{pmatrix},$$

   $s_1$, $s_2$, $s_3$, $s_4$ being respectively the first, the second, the third and the fourth symbols, the star designating the complex conjugate, and a, b, c, d being complex numbers of modulus 1.

2. Device for transmitting an input signal through at least a channel of a wireless communication system, **characterized in that** it implements the method according to claim 1.

3. Method for estimating an incoming signal corresponding to a sequence of symbols coded with a coding matrix and transmitted through a propagation channel, said incoming signal_comprising at least first, second, third and fourth components $r_1$, $r_2$, $r_3$, $r_4$ representing signals received by at least first and second receive antennas (Rx1, Rx2) during first and second time slots (T1, T2) respectively, the sequence of symbols comprising at least a first, a second, a third and a fourth symbols $s_1$, $s_2$, $s_3$, $s_4$, the value of each symbol belonging to a signal constellation,
   each component of the coding matrix *MC* being a linear combination of two symbols among the first, the second, the third and the fourth symbols $s_1$, $s_2$, $s_3$, $s_4$, a first and a second components of a first column of the coding matrix being transmitted respectively through a first and a second transmit antennas (Tx1, Tx2) at the first time slot (T1), a first and a second components of a second column of the coding matrix being transmitted respectively through the first and the second transmit antennas (Tx1, Tx2) at the second time slot (T2),
   said propagation channel being defined by a channel matrix *H* comprising components representing a propagation channel response between the first transmit antenna (Tx1) and said at least first and second receive antennas (Rx1, Rx2), and between the second transmit antenna (Tx2) and said at least first and second receive antennas (Rx1, Rx2),
   **characterized in that** the coding matrix *MC* is defined as:

   $$\begin{pmatrix} as_1 + bs_3 & -cs_2^* - ds_4^* \\ as_2 + bs_4 & cs_1^* + ds_3^* \end{pmatrix}.$$

   $s_1$, $s_2$, $s_3$, $s_4$ being respectively the first, the second, the third and the fourth symbols, the star designating the complex conjugate, and a, b, c, d being complex numbers of modulus 1,
and **in that** said method comprises at least the steps of:

- computing (11) a first intermediate signal $y_1$ from said at least first, second, third and fourth components of the incoming signal, said first intermediate signal $y_1$ being independent of the second, third and fourth symbols and being a first affine function in which the variable is the first symbol $s_1$,
- computing (12) a second intermediate signal $y_2$ from said at least first, second, third and fourth components of the incoming signal, said second intermediate signal $y_2$ being independent of the first, third and fourth symbols and being a second affine function in which the variable is the second symbol $s_2$,
- estimating (21) the value of the first symbol $s_{1W}$ from the first intermediate signal $y_1$ by detection of maximum likelihood
- estimating (22) the value of the second symbol $s_2$ from the second intermediate signal $y_2$ by detection of maximum likelihood,
- selecting a set of couples of values, each couple of values consisting in the values of two symbols belonging to the signal constellation,
- for each couple of values selected, calculating (30) a Euclidean distance between the incoming signal and a noiseless signal, the noiseless signal being defined as the product of the channel matrix $H$ and the coding matrix $MC$ corresponding to the selected couple of values and the estimated values of the first and the second symbols $s_1$, $s_2$,
- selecting the minimal Euclidean distance among the Euclidean distances respectively calculated for the different selected couples of values, and
- selecting (40) the values of the first, second, third and fourth symbols $s_1, s_2, s_3, s_4$ corresponding to the selected minimum Euclidean distance.

4. Method according to claim 3, **characterized in that** the first and the second intermediate signals $y_1$, $y_2$ are computed by performing at least :

- step A : for each component of the incoming signal, removing terms depending of the third and the fourth symbols $s_3$, $s_4$ which are present in said component of the incoming signal,
- step B1 : for each result of step A, multiplying said result by one of the components of the channel matrix or by the complex conjugate of one of the components of the channel matrix, so that the coefficient of the first symbol in each result of step A contains a square modulus term,
- step B2 : for each result of step A, multiplying said result by one of the components of the channel matrix or by the complex conjugate of one of the components of the channel matrix, so that the coefficient of the second symbol in each result of step A contains a square modulus term,
- step C1 : computing the first intermediate signal by using all the results of step B1,
- step C2 : computing the second intermediate signal by using all the results of step B2.

5. Method according to any of claims 3 and 4, **characterized in that** the slopes of the affine functions of the first and the second intermediate signals $y_1$, $y_2$ are equal to the sum of all the square modulus of the components of the channel matrix $H$.

6. Method according to any of claims 3 to 5, **characterized in that** the set of couples of values includes all the couple of values belonging to the signal constellation.

7. Method according to any of claims 3 to 6, **characterized in that** the third symbol $s_3$ is identical to the fourth symbol $s_4$.

8. Method according to any of claims 3 to 7, **characterized in that** the method uses the first, the second, a third and a fourth receive antennas.

9. Devise for estimating an incoming signal, **characterized in that** it implements the method according to any of the claims 3 to 8.


**Patentansprüche**

1. Verfahren zum Übertragen einer Symbolfolge über mindestens einen Kanal in einem drahtlosen Kommunikationssystem, wobei die Symbolfolge mindestens ein erstes, ein zweites, ein drittes und ein viertes Symbol s₁, s₂, s₃, s₄ umfasst, wobei der Wert jedes Symbols zu einer Signalkonstellation gehört,
wobei das Verfahren mindestens folgende Schritte umfasst:

- Codieren durch Bilden einer Codierungsmatrix MC mit der Symbolfolge, wobei jede Komponente der Codierungsmatrix MC eine lineare Kombination von zwei Symbolen aus dem ersten, dem zweiten, dem dritten und dem vierten Symbol $s_1$, $s_2$, $s_3$, $s_4$ ist,
- Übertragen einer ersten und einer zweiten Komponente einer ersten Spalte der Codierungsmatrix jeweils über eine erste und eine zweite Sendeantenne (Tx1, Tx2) in einem ersten Zeitschlitz (T1),
- Übertragen einer ersten und einer zweiten Komponente einer zweiten Spalte der Codierungsmatrix jeweils über die erste und die zweite Sendeantenne (Tx1, Tx2) in einem zweiten Zeitschlitz (T2),

**dadurch gekennzeichnet, dass** die Codierungsmatrix MC folgendermaßen definiert ist:

$$\begin{pmatrix} as_1 + bs_3 & -cs_2^* - ds_4^* \\ as_2 + bs_4 & cs_1^* + ds_3^* \end{pmatrix},$$

wobei $s_1$, $s_2$, $s_3$, $s_4$ jeweils das erste, das zweite, das dritte und das vierte Symbol sind, wobei der Stern die konjugierte komplexe Zahl bezeichnet, und a, b, c, d komplexe Zahlen des Moduls 1 sind.

2. Vorrichtung zum Übertragen eines Eingangssignals über mindestens einen Kanal eines drahtlosen Kommunikationssystems, **dadurch gekennzeichnet, dass** es das Verfahren nach Anspruch 1 umsetzt.

3. Verfahren zum Schätzen eines ankommenden Signals, das einer Symbolfolge entspricht, die mit einer Codierungsmatrix codiert ist und über einen Ausbreitungskanal übertragen wird, wobei das ankommende Signal mindestens erste, zweite, dritte und vierte Komponenten $r_1$, $r_2$, $r_3$, $r_4$ umfasst, die Signale darstellen, die von mindestens ersten und zweiten Empfangsantennen (Rx1, Rx2) während jeweils ersten und zweiten Zeitschlitzen (T1, T2) empfangen werden, wobei die Symbolfolge mindestens ein erstes, ein zweites, ein drittes und ein viertes Symbol $s_1$, $s_2$, $s_3$, $s_4$ umfasst, wobei der Wert jedes Symbols zu einer Signalkonstellation gehört,
wobei jede Komponente der Codierungsmatrix MC eine lineare Kombination von zwei Symbolen aus dem ersten, dem zweiten, dem dritten und dem vierten Symbol $s_1$, $s_2$, $s_3$, $s_4$ ist, wobei eine erste und eine zweite Komponente einer ersten Spalte der Codierungsmatrix jeweils über eine erste und eine zweite Sendeantenne (Tx1, Tx2) in dem ersten Zeitschlitz (T1) übertragen wird, wobei eine erste und eine zweite Komponente einer zweiten Spalte der Codierungsmatrix jeweils über die erste und die zweite Sendeantenne (Tx1, Tx2) in dem zweiten Zeitschlitz (T2) übertragen wird,
wobei der Ausbreitungskanal durch eine Kanalmatrix H definiert ist, die Komponenten umfasst, die ein Ausbreitungskanalverhalten zwischen der ersten Sendeantenne (Tx1) und den mindestens ersten und zweiten Empfangsantennen (Rx1, Rx2) und zwischen der zweiten Sendeantenne (Tx2) und den mindestens ersten und zweiten Empfangsantennen (Rx1, Rx2) darstellt,
**dadurch gekennzeichnet, dass** die Codierungsmatrix MC folgendermaßen definiert ist:

$$\begin{pmatrix} as_1 + bs_3 & -cs_2^* - ds_4^* \\ as_2 + bs_4 & cs_1^* + ds_3^* \end{pmatrix},$$

wobei $s_1$, $s_2$, $s_3$, $s_4$ jeweils das erste, das zweite, das dritte und das vierte Symbol sind, wobei der Stern die konjugierte komplexe Zahl bezeichnet, und a, b, c, d komplexe Zahlen des Moduls 1 sind,
und dass das Verfahren mindestens folgende Schritte umfasst:

- Berechnen (11) eines ersten Zwischensignals $y_1$ aus den mindestens ersten, zweiten, dritten und vierten Komponenten des ankommenden Signals, wobei das erste Zwischensignal $y_1$ von den zweiten, dritten und vierten Symbolen unabhängig ist und eine erste affine Funktion ist, in der die Variable das erste Symbol $s_1$ ist,
- Berechnen (12) eines zweiten Zwischensignals $y_2$ aus den mindestens ersten, zweiten, dritten und vierten Komponenten des ankommenden Signals, wobei das zweite Zwischensignal $y_2$ von den ersten, dritten und vierten Symbolen unabhängig ist und eine zweite affine Funktion ist, in der die Variable das zweite Symbol $s_2$ ist,
- Schätzen (21) des Wertes des ersten Symbols $s_1$ aus dem ersten Zwischensignal $y_1$ durch Erkennen der maximalen Wahrscheinlichkeit,
- Schätzen (22) des Wertes des zweiten Symbols $s_2$ aus dem zweiten Zwischensignal $y_2$ durch Erkennen der maximalen Wahrscheinlichkeit,
- Auswählen eines Satzes von Wertepaaren, wobei jedes Wertepaar aus den Werten von zwei Symbolen besteht, die zu der Signalkonstellation gehören,
- für jedes ausgewählte Wertepaar, Berechnen (30) einer euklidischen Distanz zwischen dem ankommenden Signal und einem rauschfreien Signal, wobei das rauschfreie Signal als das Produkt der Kanalmatrix H und der Codierungsmatrix MC definiert ist, die dem ausgewählten Wertepaar und den geschätzten Werten der ersten und zweiten Symbole $s_1$, $s_2$, entsprechen,
- Auswählen der minimalen euklidischen Distanz aus den euklidischen Distanzen, die jeweils für die verschiedenen ausgewählten Wertepaare berechnet werden, und
- Auswählen (40) der Werte der ersten, zweiten, dritten und vierten Symbole $s_1$, $s_2$, $s_3$, $s_4$, die der ausgewählten minimalen euklidischen Distanz entsprechen.

4. Verfahren nach Anspruch 3, **dadurch gekennzeichnet, dass** das erste und das zweite Zwischensignal $y_1$, $y_2$ berechnet werden, indem mindestens folgende Schritte ausgeführt werden:

- Schritt A: für jede Komponente des ankommenden Signals, Entfernen von Termen, die von dem dritten und dem vierten Symbol $s_3$, $s_4$ abhängig sind, die in der Komponente des ankommenden Signals vorliegen,
- Schritt B1: für jedes Ergebnis von Schritt A, Multiplizieren des Ergebnisses mit einer der Komponenten des Kanalmatrix oder mit der konjugierten komplexen Zahl einer der Komponenten der Kanalmatrix, so dass der Koeffizient des ersten Symbols in jedem Ergebnis von Schritt A einen Quadratmodulterm enthält,
- Schritt B2: für jedes Ergebnis von Schritt A, Multiplizieren des Ergebnisses mit einer der Komponenten der Kanalmatrix oder mit der konjugierten komplexen Zahl einer der Komponenten der Kanalmatrix, so dass der Koeffizient des zweiten Symbols in jedem Ergebnis von Schritt A einen Quadratmodulterm enthält,
- Schritt C1: Berechnen des ersten Zwischensignals unter Verwendung aller Ergebnisse von Schritt B1,
- Schritt C2: Berechnen des zweiten Zwischensignals unter Verwendung aller Ergebnisse von Schritt B2.

5. Verfahren nach einem der Ansprüche 3 und 4, **dadurch gekennzeichnet, dass** die Richtungskoeffizienten der affinen Funktionen des ersten und des zweiten Zwischensignals $y_1$, $y_2$ gleich der Summe aller Quadratmodule der Komponenten der Kanalmatrix H sind.

6. Verfahren nach einem der Ansprüche 3 bis 5, **dadurch gekennzeichnet, dass** der Satz Wertepaare alle Wertepaare umfasst, die zu der Signalkonstellation gehören.

7. Verfahren nach einem der Ansprüche 3 bis 6, **dadurch gekennzeichnet, dass** das dritte Symbol $s_3$ mit dem vierten Symbol $s_4$ identisch ist.

8. Verfahren nach einem der Ansprüche 3 bis 7, **dadurch gekennzeichnet, dass** das Verfahren die erste, die zweite, eine dritte und eine vierte Empfangsantenne verwendet.

9. Vorrichtung zum Schätzen eines ankommenden Signals, **dadurch gekennzeichnet, dass** sie das Verfahren nach einem der Ansprüche 3 bis 8 umsetzt.

## Revendications

1. Procédé de transmission d'une séquence de symboles par le biais d'au moins un canal dans un système de communication sans fil, la séquence de symboles comprenant au moins des premier, deuxième, troisième et quatrième symboles, $s_1$, $s_2$, $s_3$, $s_4$, la valeur de chaque symbole appartenant à une constellation de signal,
le procédé comprenant au moins les étapes suivantes :

- le codage par formation d'une matrice de codage MC avec ladite séquence de symboles, chaque composante de la matrice de codage MC étant une combinaison linéaire de deux symboles parmi les premier, deuxième, troisième et quatrième symboles s₁, s₂, s₃, s₄,
- la transmission de première et deuxième composantes d'une première colonne de la matrice de codage par le biais respectivement de première et seconde antennes de transmission (Tx1, Tx2), à un premier intervalle de temps (T1),
- la transmission de première et deuxième composantes d'une seconde colonne de la matrice de codage par le biais respectivement des première et seconde antennes de transmission (Tx1, Tx2), à un second intervalle de temps (T2),

**caractérisé en ce que** la matrice de codage CM est définie comme :

$$\begin{pmatrix} as_1 + bs_3 & -cs_2^* - ds_4^* \\ as_2 + bs_4 & cs_1^* + ds_3^* \end{pmatrix},$$

s₁, s₂, s₃, s₄ étant respectivement les premier, deuxième, troisième et quatrième symboles, l'astérisque désignant le conjugué complexe, et a, b, c, d étant des nombres complexes de module 1.

**2.** Dispositif de transmission d'un signal d'entrée par le biais d'au moins un canal d'un système de communication sans fil, **caractérisé en ce qu'**il met en oeuvre le procédé selon la revendication 1.

**3.** Procédé d'estimation d'un signal entrant correspondant à une séquence de symboles codés avec une matrice de codage et transmis par le biais d'un canal de propagation, ledit signal entrant comprenant au moins des première, deuxième, troisième et quatrième composantes r₁, r₂, r₃, r₄ représentant des signaux reçus par au moins des première et seconde antennes de réception (Rx1, Rx2) pendant des premier et second intervalles de temps (T1, T2) respectivement, la séquence de symboles comprenant au moins des premier, deuxième, troisième et quatrième symboles, s₁, s₂, s₃, s₄, la valeur de chaque symbole appartenant à une constellation de signal, chaque composante de la matrice de codage MC étant une combinaison linéaire de deux symboles parmi les premier, deuxième, troisième et quatrième symboles s₁, s₂, s₃, s₄, des première et deuxième composantes d'une première colonne de la matrice de codage étant transmises respectivement par le biais de première et seconde antennes de transmission (Tx1, Tx2) au premier intervalle de temps (T1), des première et deuxième composantes d'une seconde colonne de la matrice de codage étant transmises respectivement par le biais des première et seconde antennes de transmission (Tx1, Tx2) au second intervalle de temps (T2), ledit canal de propagation étant défini par une matrice de canal H comprenant des composantes représentant une réponse de canal de propagation entre la première antenne de transmission (Tx1) et lesdites au moins première et seconde antennes de réception (Rx1, Rx2), et entre la seconde antenne de transmission (Tx2) et lesdites au moins première et seconde antennes de réception (Rx1, Rx2), **caractérisé en ce que** la matrice de codage MC est définie comme :

$$\begin{pmatrix} as_1 + bs_3 & -cs_2^* - ds_4^* \\ as_2 + bs_4 & cs_1^* + ds_3^* \end{pmatrix},$$

s₁, s₂, s₃, s₄ étant respectivement les premier, deuxième, troisième et quatrième symboles, l'astérisque désignant le conjugué complexe, et a, b, c et d étant des nombres complexes de module 1, et **en ce que** ledit procédé comprend au moins les étapes suivantes :

- le calcul (11) d'un premier signal intermédiaire y₁ à partir desdites au moins première, deuxième, troisième et quatrième composantes du signal entrant, ledit premier signal intermédiaire y₁ étant indépendant des deuxième, troisième et quatrième symboles et étant une première fonction affine dans laquelle la variable est le premier symbole s₁,

- le calcul (12) d'un second signal intermédiaire $y_2$ à partir desdites au moins première, deuxième, troisième et quatrième composantes du signal entrant, ledit second signal intermédiaire $y_2$ étant indépendant des premier, troisième et quatrième symboles et étant une seconde fonction affine dans laquelle la variable est le second symbole $s_2$,

- l'estimation (21) de la valeur du premier symbole $s_1$ à partir du premier signal intermédiaire $y_1$ par détection de maximum de vraisemblance,

- l'estimation (22) de la valeur du second symbole $s_2$ à partir du second signal intermédiaire $y_2$ par détection de maximum de vraisemblance,

- la sélection d'un ensemble de couples de valeurs, chaque couple de valeurs consistant en les valeurs de deux symboles appartenant à la constellation de signal,

- pour chaque couple de valeurs sélectionné, le calcul (30) d'une distance euclidienne entre le signal entrant et un signal sans bruit, le signal sans bruit étant défini comme le produit de la matrice de canal H et de la matrice de codage MC correspondant au couple de valeurs sélectionné et aux valeurs estimées des premier et second symboles $s_1$, $S_2$,

- la sélection de la distance euclidienne minimale parmi les distances euclidiennes calculées respectivement pour les différents couples de valeurs sélectionnés, et

- la sélection (40) des valeurs des premier, deuxième, troisième et quatrième symboles $s_1$, $s_2$, $s_3$, $s_4$ correspondant à la distance euclidienne minimale sélectionnée.

4. Procédé selon la revendication 3, **caractérisé en ce que** les premier et second signaux intermédiaires $y_1$, $y_2$ sont calculés en effectuant au moins les étapes suivantes :

- étape A : pour chaque composante du signal entrant, la suppression des termes dépendants des troisième et quatrième symboles $S_3$, $S_4$ qui sont présents dans ladite composante dudit signal entrant,

- étape B1 : pour chaque résultat de l'étape A, la multiplication dudit résultat par une des composantes de la matrice de canal ou par le conjugué complexe d'une des composantes de la matrice de canal, afin que le coefficient du premier symbole dans chaque résultat de l'étape A contienne un terme de module au carré,

- étape B2 : pour chaque résultat de l'étape A, la multiplication dudit résultat par une des composantes de la matrice de canal ou par le conjugué complexe d'une des composantes de la matrice de canal, afin que le coefficient du second symbole dans chaque résultat de l'étape A contienne un terme de module au carré,

- étape C1 : le calcul du premier signal intermédiaire au moyen de l'ensemble des résultats de l'étape B1,

- étape C2 : le calcul du second signal intermédiaire au moyen de l'ensemble des résultats de l'étape B2.

5. Procédé selon l'une quelconque des revendications 3 et 4, **caractérisé en ce que** les pentes des fonctions affines des premier et second signaux intermédiaires $y_1$, $y_2$ sont égales à la somme de l'ensemble des modules au carré des composantes de la matrice de canal H.

6. Procédé selon l'une quelconque des revendications 3 à 5, **caractérisé en ce que** l'ensemble de couples de valeurs comprend tous les couples de valeurs appartenant à la constellation de signal.

7. Procédé selon l'une quelconque des revendications 3 à 6, **caractérisé en ce que** le troisième symbole $s_3$ est identique au quatrième symbole $s_4$.

8. Procédé selon l'une quelconque des revendications 3 à 7, **caractérisé en ce que** le procédé utilise les première et deuxième antennes de réception et des troisième et quatrième antennes de réception.

9. Dispositif d'estimation d'un signal entrant, **caractérisé en ce qu'**il met en oeuvre le procédé selon l'une quelconque des revendications 3 à 8.

Fig. 1

Fig. 2

$(r_1, r_2)$ →

PROC

$(r_3, r_4)$ →

$y_1$ →

$y_2$ →

TD

→ $\hat{s}_1$

→ $\hat{s}_2$

## Fig. 3

$(\hat{s}_1, \hat{s}_2, s_3^k, s_4^p)$ →

ML

$(r_1, r_2, r_3, r_4)$ →

→ $(\hat{s}_1, \hat{s}_2, \hat{s}_3, \hat{s}_4)$

## Fig. 4

$$y_1 = \left( |h_{11}|^2 + |h_{12}|^2 + |h_{21}|^2 + |h_{22}|^2 \right) s_1 + w_1$$

11

$$y_2 = \left( |h_{11}|^2 + |h_{12}|^2 + |h_{21}|^2 + |h_{22}|^2 \right) s_2 + w_2$$

12

estimating value of s1= $\hat{s}_1$

21

estimating value of s2= $\hat{s}_2$

22

$$D(\hat{s}_1, \hat{s}_2, s_3^k, s_4^p) \quad K=1,\ldots M; \; p=1,\ldots M$$

30

$$(\hat{s}_1, \hat{s}_2, \hat{s}_3, \hat{s}_4)$$

40

# Fig. 5

**EP 1 978 666 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1195937 A